# EUROPEAN PATENT APPLICATION

(11) **EP 4 648 306 A1**
(43) Date of publication of application: **12.11.2025**
(21) Application number: 25175327.3
(22) Date of filing: 09.05.2025
(51) Int. Cl.: H04B 7/185, H04W 48/04

(54) **METHOD OF IMPLEMENTING NON-TERRESTRIAL NETWORK ACCESSING AND EQUIPMENT USING THE SAME**

(30) Priority: 10.05.2024 US 202463645147 P
(71) Applicant: Industrial Technology Research Institute, 310401 Hsinchu (TW)
(72) Inventor: Cheng, Ching-Wen, 308003 Baoshan Township, Hsinchu County (TW)
(74) Representative: Becker Kurig & Partner Patentanwälte mbB

(57) **Abstract**

A method and a user equipment of implementing non-terrestrial network accessing are provided. The method includes: receiving a service accessing configuration, wherein the service accessing configuration includes information of at least one intended area (S151); and determining whether the user equipment is allowed to perform service accessing according to the service accessing configuration (S152).

## Description

### BACKGROUND

### Technical Field

The disclosure is directed to a method of implementing non-terrestrial network (NTN) accessing and a user equipment (UE).

### Description of Related Art

The coverage of an NTN cell may span multiple countries or administrative areas. When the service area of a broadcast service is smaller than the coverage of the serving NTN cell, it becomes challenging for the communication system to restrict or manage the accessing behavior of the UEs outside the service area.

### SUMMARY

The disclosure provides a method of implementing NTN accessing and the UE using the same method. The disclosure may manage the service access behavior of the UE located within the coverage of the NTN cell.

The present disclosure is directed to a method of implementing non-terrestrial network accessing, used by a user equipment, including: receiving a service accessing configuration, wherein the service accessing configuration includes information of at least one intended area; and determining whether the user equipment is allowed to perform service accessing according to the service accessing configuration.

The present disclosure is directed to a method of implementing non-terrestrial network accessing, used by a base station, including: transmitting a service accessing configuration to a user equipment, wherein the service accessing configuration includes information of at least one intended area; and in response to transmitting the service accessing configuration, providing a network service to the user equipment.

The present disclosure is directed to a user equipment for implementing non-terrestrial network accessing, including: a transceiver and a processor. The processor is coupled to the transceiver, wherein the processor is configured to: receive a service accessing configuration via the transceiver, wherein the service accessing configuration includes information of at least one intended area; and determining whether the user equipment is allowed to perform service accessing according to the service accessing configuration.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a flowchart of a method of implementing NTN accessing according to one embodiment of the present disclosure.
FIG. 2 illustrates a schematic diagram of an NTN cell coverage according to one embodiment of the present disclosure.
FIG. 3 illustrates a schematic diagram of an NTN cell coverage according to one embodiment of the present disclosure.
FIG. 4 illustrates a schematic diagram of an NTN cell coverage according to one embodiment of the present disclosure.
FIG. 5 illustrates a flowchart of determining whether to check intended areas according to one embodiment of the present disclosure.
FIG. 6 illustrates a flowchart of determining whether to check intended areas according to one embodiment of the present disclosure.
FIG. 7 illustrates a flowchart of determining whether to check intended areas according to one embodiment of the present disclosure.
FIG. 8 illustrates a flowchart of determining whether to check intended areas according to one embodiment of the present disclosure.
FIG. 9 illustrates a flowchart of determining whether to perform service accessing according to one embodiment of the present disclosure.
FIG. 10 illustrates a flowchart of applying the set of configurations according to one embodiment of the present disclosure.
FIG. 11 illustrates a schematic diagram of different sets of system information according to one embodiment of the present disclosure.
FIG. 12 illustrates a schematic diagram of different SIB contents for specific services according to one embodiment of the present disclosure.
FIG. 13 illustrates a schematic diagram of different SIB contents for specific services according to one embodiment of the present disclosure.
FIG. 14 illustrates a signaling diagram of a NAS procedure and an RRC procedure according to one embodiment of the present disclosure.
FIG. 15 illustrates a flowchart of a method of implementing NTN network accessing according to one embodiment of the present disclosure.
FIG. 16 illustrates a flowchart of a method of implementing NTN network accessing according to one embodiment of the present disclosure.
FIG. 17 illustrates a schematic diagram of a communication device according to one embodiment of the present disclosure.

### DESCRIPTION OF THE EMBODIMENTS

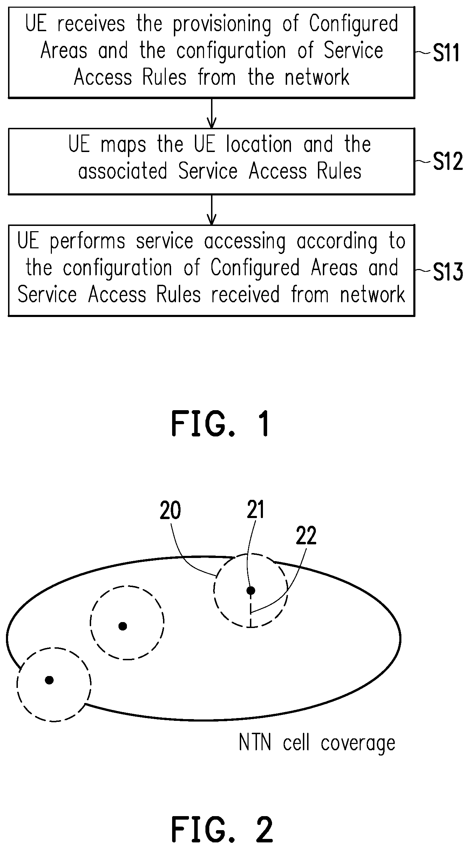

FIG. 1 illustrates a flowchart of a method of implementing NTN accessing according to one embodiment of the present disclosure. In step S11, A UE may receive the service accessing configuration from the network (or base station), wherein the service accessing configuration may include the provisioning of one or more configured areas (e.g., a configured area list) and the configuration of one or more service access rules (e.g., a list consists of at least one service access rule). The provisioning of configured areas may include information of one or more configured areas, wherein a configured area may be set as an intended area or a non-intended area. A UE may determine whether the UE is allowed to perform service accessing according to the service accessing configuration. A base station (BS) may provide network services to a UE after transmitting the service configuration to the UE. In step S12, the UE may map the UE location and the associated service access rules. In step S13, the UE may perform service accessing according to the configuration of configured areas and service access rules received from the network.

In one embodiment, the provisioning of configured areas or the intended area may be configured from the network (e.g., core network (CN), serving radio access network (RAN) of the UE, or serving cell of the UE) to the UE by: broadcast message (e.g., system information broadcast by the RAN or serving cell); UE specific message (e.g., dedicated radio resource control (RRC) message including *SystemInformation, RRCRelease* message, or *RRCReconfiguration* message from the RAN or serving cell); or non-access stratum (NAS) message (e.g., UE Configuration Update, Registration Response, or Deregistration Response from the CN).

In one embodiment, the provisioning of configured areas configured by the dedicated message (e.g., RRC or NAS message) may override the provisioning of configured areas configured by the broadcast message.

In one embodiment, if a second provisioning of configured areas is configured to the UE after a first provisioning of configured areas is configured to the UE, the second provisioning of configured areas may override the first provisioning of configured areas.

In one embodiment, the provisioning of configured areas may include one or more configured reference locations (also referred to as *AreaReferenecLocation*), wherein the configured reference location may be a global navigation satellite system (GNSS) location or geographical location including longitude information and latitude information. An intended area may be derived (e.g., by UE) based on the one or more configured reference locations.

In one embodiment, a configured area may be associated with a configured area identity. In one embodiment, an intended area may be associated with an intended area identity (ID), or a non-intended area may be associated with a non-intended area ID. A configured reference location may be associated with a configured area ID.

In one embodiment, the provisioning of configured areas configured by broadcast message may be applied to all the UEs receiving the provisioning.

In one embodiment, the configuration of service access rules may be configured from the network (e.g., CN, RAN, or serving cell of the UE) to the UE by: broadcast message (e.g., system information broadcast by the RAN or serving cell); UE specific message (e.g., dedicated RRC message including *SystemInformation*, *RRCRelease* message, or *RRCReconfiguration* message from the RAN or serving cell); or NAS message (e.g., UE Configuration Update, Registration Response, or Deregistration Response from the CN).

In one embodiment, the configuration of service access rules configured by the dedicated message (e.g., RRC or NAS message) may override the configuration of service access rules configured by the broadcast message.

In one embodiment, if a second configuration of service access rules is configured to the UE after a first service access rules is configured to the UE, the second service access rules may override the first service access rules.

The service access rules may provide information for determining whether a UE is allowed to perform service accessing in the configured areas. In one embodiment, the configuration of service access rules configured by broadcast message may be applied to all the UEs receiving the configuration.

In one embodiment, the provisioning of configured areas and the configuration of service access rules may be transmitted from the network to the UE by the same message (e.g., the same system information block (SIB)). In one embodiment, the provisioning of configured areas and the configuration of service access rules may be transmitted to the UE separately by different messages.

In one embodiment, the configuration of configured areas may include the coordinate of an area reference location (e.g., the center of the configured area) and an area reference distance (e.g., the radius of the configured area), wherein the area reference location may be a GNSS location including longitude information and latitude information. FIG. 2 illustrates a schematic diagram of an NTN cell coverage according to one embodiment of the present disclosure. A UE may determine a configured area 20 according to the area reference location 21 and the area reference distance 22.

Table 1 is an example of pseudo code of a configuration of configured areas. The configuration of configured areas (i.e., *ConfiguredArea*) may include one or more area IDs (i.e., *areaID*), one or more area reference locations (i.e., *areaReferenceLocation*), or one or more area reference distances (i.e., *areaReferenceDistance*).

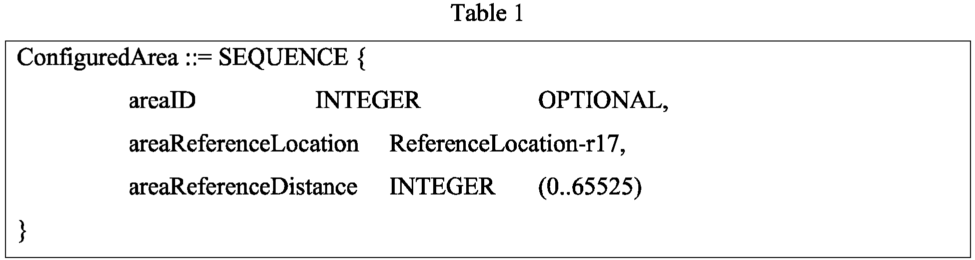

In one embodiment, a UE may determine that the UE is located within a configured area if the distance between the UE and the configured area (or the area reference location) is less than or equal to the area reference distance (or a threshold) of the configured area. In one embodiment, a UE may determine that the UE is beyond a configured area if the distance between the UE and the configured area (or the area reference location) is greater than the area reference distance (or a threshold) of the configured area.

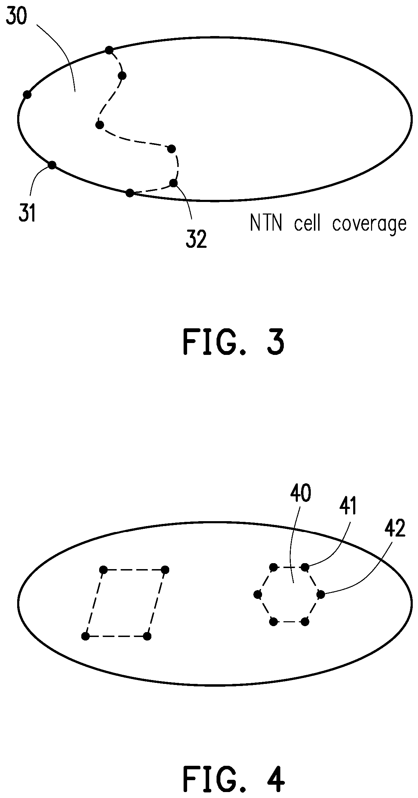

In one embodiment, the configuration of configured areas may include the coordinates of multiple area reference locations in an area reference location list, wherein the area reference location may be a GNSS location including longitude information and latitude information. The closed shape plotted out sequentially by the multiple area reference locations may indicate a configured area. FIG. 3 illustrates a schematic diagram of an NTN cell coverage according to one embodiment of the present disclosure. A UE may determine a configured area 30 by sequentially connecting multiple area reference locations (e.g., area reference locations 31 and 32) to form a closed shape.

Table 2 is an example of pseudo code of a configuration of configured areas. The configuration of configured areas (i.e., *ConfiguredArea*) may include one or more area IDs (i.e., *areaID*) and an area reference location list (i.e., *areaReferenceLocationList*), wherein the area reference location list may include multiple area reference locations.

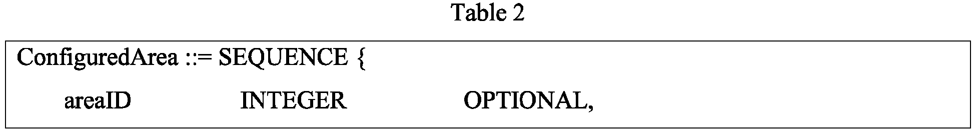

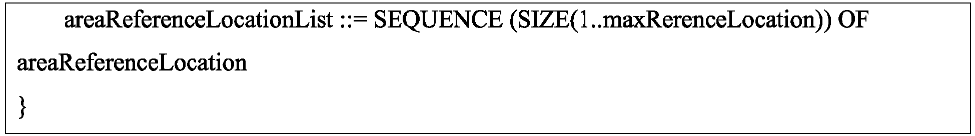

In one embodiment, a UE may determine that the UE is located within a configured area if the UE is located within the area plotted out based on the multiple area reference locations. In one embodiment, a UE may determine that the UE is beyond a configured area if the UE is located outside the area plotted out based on the multiple area reference locations.

In one embodiment, the configuration of configured areas may include the coordinates of multiple area reference locations and a corresponding closed shape, wherein the area reference location may be a GNSS location including longitude information and latitude information. The closed shape plotted out sequentially by the multiple area reference locations may indicate a configured area. FIG. 4 illustrates a schematic diagram of an NTN cell coverage according to one embodiment of the present disclosure. A UE may determine a configured area 40 by sequentially connecting multiple area reference locations (e.g., area reference locations 41 and 42) to form a closed shape.

Table 3 is an example of pseudo code of a configuration of configured areas. The configuration of configured areas (i.e., *ConfiguredArea*) may include one or more area IDs (i.e., *areaID*), an area reference location list (i.e., *areaReferenceLocationList*), and a closed shape (e.g., *areaShape*), wherein the area reference location list may include multiple area reference locations. The closed shape may include, for example, a circle, a square, a polygon, or an ellipse.

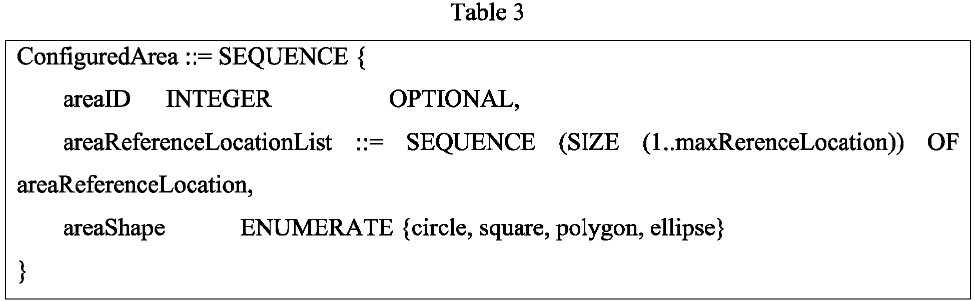

In one embodiment, a UE may determine that the UE is located within a configured area if the UE is located within the area plotted out based on the multiple area reference locations. In one embodiment, a UE may determine that the UE is beyond a configured area if the UE is located outside the area plotted out based on the multiple area reference locations.

In one embodiment, each service access rule may be associated with one or more configured areas. If the area identity of the configured area is not indicated (to a UE or a BS), the presented sequence of a configured area in a configured area list may represent the area identity associated with the configured area.

Table 4 is an example of pseudo code of a service access rule. The service access rule (i.e., *ServiceAccessRule)* may include a configured area list (i.e., *configuredAreaList*) and a configured area action (i.e., *configuredAreaAction*). The configured area list may include one or more configured areas. The one or more configured areas in the configured area list may be set to one or more intended areas or one or more non-intended areas based on the configured area action. If the area identities of the configured areas are not indicated, the area ID of the first configured area in the configured area list may be associated with a first area ID, the area ID of the second configured area in the configured area list may be associated with a second area ID, and so on. If the configured area action is absent, the configured area action of the associated configure areas could be a default action (e.g., may be treated as intended by the UE).

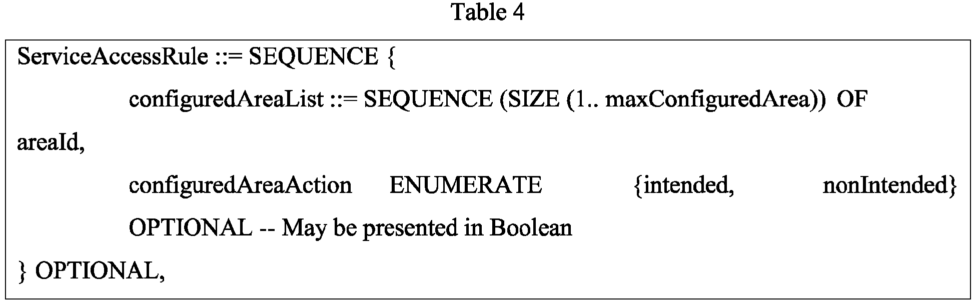

Table 5 is an example of pseudo code of a service access rule. The service access rule (i.e., ServiceAccessRule) may include an intended area list (i.e., *intendedAreaList*) and a non-intended area list (i.e., *nonIntendedAreaList*), wherein at least one of the intended area list or the non-intended area list may be applied to the UE. The intended area list may include one or more configured areas, wherein each configured area may be considered to be an intended area. The non-intended area list may include one or more configured areas, wherein each configured area may be considered to be a non-intended area. If the area identities of the configured areas are not indicated, the area ID of the first configured area in the intended areas list (or non-intended area list) may be associated with a first area ID, the area ID of the second configured area in the intended areas list (or non-intended area list) may be associated with a second area ID, and so on.

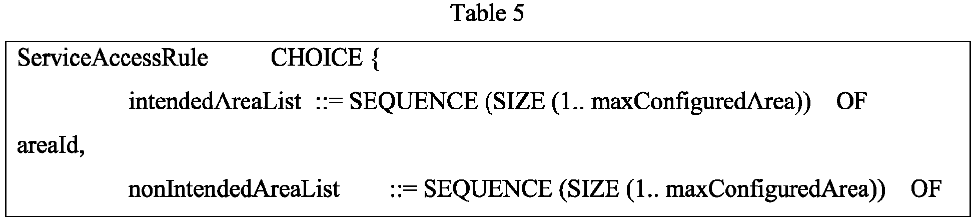

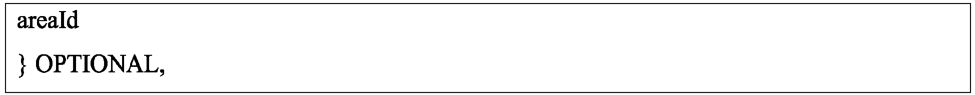

Table 6 is an example of pseudo code of a service access rule list. The service access rule list (i.e., *serviceAccessRuleList*) may include one or more service access rules, wherein each service access rule (i.e., *ServiceAccessRule)* may include an area ID (i.e., *areaID*) and a configured area action (i.e., *configuredAreaAction*)*.* The configured area corresponding to the area ID may set to an intended area or a non-intended area according to the configured area action. If the configured area action is absent, the configured area action of the associated configure areas could be a default action (e.g., may be treated as intended by the UE).

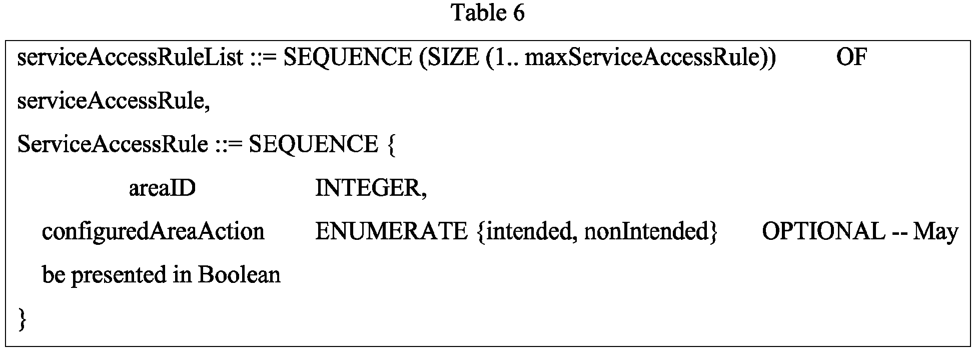

In one embodiment, a UE is required to check whether the UE is located within an intended area before service accessing in the serving NTN cell only when one or more service access rules are configured to the UE by the serving cell. A configured area is considered as an intended area by a UE in the following cases: the configured area is indicated as an intended area by the service access rule received by the UE; or the configured area is not indicated as a non-intended area by the serving access rule received by the UE.

In one embodiment, each configured area is either an intended area or a non-intended area. In one example, when a service access rule (or a list of multicast broadcast service (MBS) session ID of *MBSBroadcastCoinfiguration* message) explicitly indicates a configured area list (or a list of *IntendedServiceArea* in a SIB) as an intended list, the configured areas in the configured area list may be considered as intended areas, and the other configured areas (e.g., the configured areas outside the configured area list) may be considered as non-intended areas. In one example, when a service access rule explicitly indicates a configured area list as a non-intended list, the configured areas in the configured area list may be considered as non-intended areas, and the other configured areas (e.g., the configured areas outside the configured area list) may be considered as intended areas. In one example, when the service access rules are not configured by the NTN cell, all the configured areas overlapped with the coverage of the NTN cell may be considered as non-intended areas. In one example, when the service access rules are not configured by the NTN cell, all the configured areas overlapped with the coverage of the NTN cell may be considered as intended areas.

In one embodiment, a UE is subjected to the control of service access rules associated with a configured area in which the UE is located.

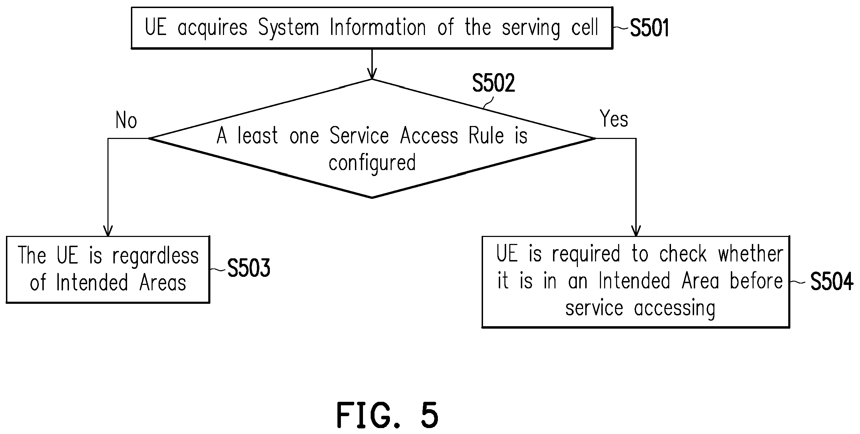

FIG. 5 illustrates a flowchart of determining whether to check intended areas according to one embodiment of the present disclosure. In step S501, a UE may acquire system information of the serving cell. The serving cell may configure one or more service access rules to the UE. In step S502, the UE may determine whether at least one service access rule is configured. The one or more service access rules may be configured by the serving cell, be configured by the previous serving cell and be stored in the UE, or be configured by the core network and stored in the UE. If the serving cell does not configure any service access rule to the UE and there is no any valid service access rule is stored in the UE, the UE is regardless of intended areas, as shown in step S503. If the serving cell does configure at least one service access rule to the UE, or there is at least one valid service access rule stored in the UE, the UE is required to check whether the UE is located within an intended area before performing service accessing, as shown in step S504. A service access rule stored in a UE is considered as valid by the UE if the service access rule is associated with a valid time (e.g., controlled by a timer) and the current time does not exceed the valid time (e.g., the timer is not expired), or the service access rule is not associated with a valid time. The UE may determine whether the UE is allowed to perform service accessing based on whether the UE is located within the intended area.

In one embodiment, an NTN cell may indicate the UE one or more public land mobile network (PLMN), wherein each PLMN may subject to control of service accessing in one or more configured areas. Only the UE subscribes or registers to the indicated PLMNs is required to check whether the UE is located within an intended area. Specifically, the UE may determine whether the UE camps on a network corresponding to the indicated PLMN ID. If the UE camps on the network corresponding to the indicated PLMN ID, the UE may determine whether the UE is located within an intended area.

Table 7 is an example of pseudo code of a PLMN list (or a list of multicast broadcast service (MBS) session ID of *MBSBroadcastCoinfiguration* message, wherein each MBS session ID includes a PLMN ID) and a service access rule configured to a UE. The PLMN list (i.e., *affectedPLMNList*) may include one or more PLMN IDs. If the UE camps on a network corresponding to one of the PLMN IDs of the PLMN list or the UE registers to one of the PLMN IDs of the PLMN list, the UE may determine whether the UE is located within an intended area according to the service access rule (i.e., *ServiceAccessRule),* as described in Table 4.

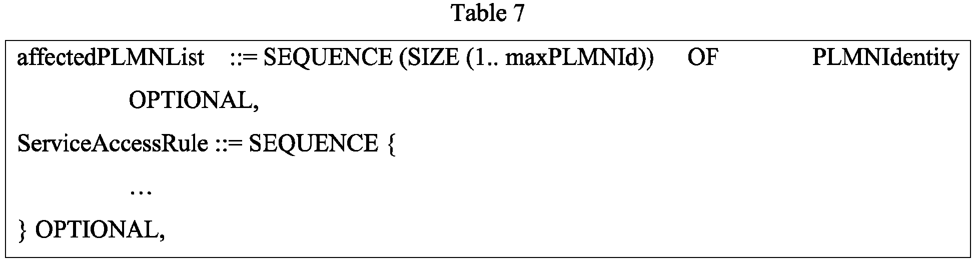

Table 8 is an example of pseudo code of a PLMN list and a service access rule configured to a UE. The PLMN list (i.e., *affectedPLMNList*) may include one or more PLMN IDs. If the UE camps on a network corresponding to one of the PLMN IDs of the PLMN list or the UE registers to one of the PLMN IDs of the PLMN list, the UE may determine whether the UE is located within an intended area according to the service access rule (i.e., *ServiceAccessRule),* as described in Table 5.

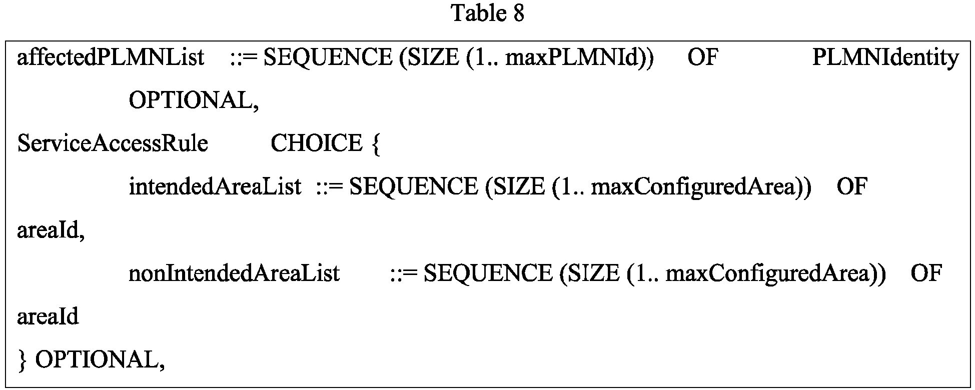

Table 9 is an example of pseudo code of a service access rule configured to a UE. In addition to information such as the configured area list, the configured area action, the intended area list, or the non-intended area list, the service access rule (i.e., *ServiceAccessRule)* may further include a PLMN list (i.e., *affectedPLMNList*), wherein the PLMN list may include one or more PLMN IDs. The service access rule may be applied to the network corresponding to the PLMN IDs. Specifically, if the UE camps on a network corresponding to one of the PLMN IDs in the PLMN list, the UE may determine whether the UE is located within an intended area according to the service access rule.

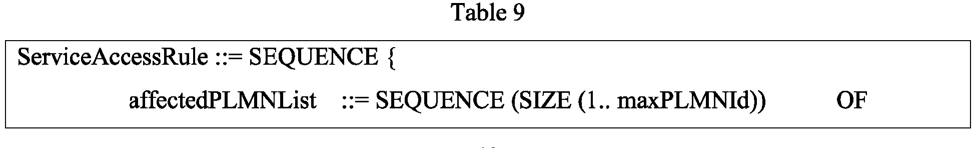

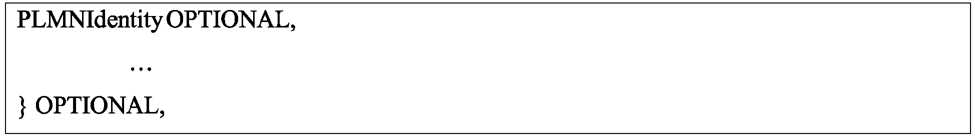

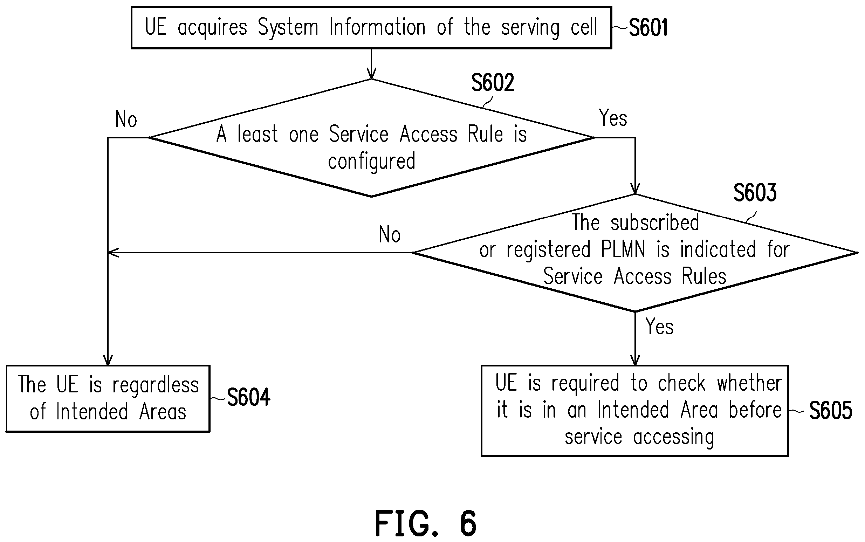

FIG. 6 illustrates a flowchart of determining whether to check intended areas according to one embodiment of the present disclosure. In step S601, a UE may acquire system information of the serving cell. The serving cell may configure one or more service access rules to the UE. In step S602, the UE may determine whether at least one service access rule is configured. The at least one service access rule may be configured by the serving cell, be configured by the previous serving cell of the UE and be stored in the UE, or be configured by the core network and stored in the UE. If the serving cell does not configure any service access rule to the UE and there is no any valid service access rule is stored in the UE, the UE is regardless of intended areas, as shown in step S604. That is, the UE may not check the intended areas before performing service accessing. If the serving cell configures at least one service access rule to the UE, or there is at least one valid service access rule stored in the UE, the UE may determine whether the subscribed or registered PLMN is indicated to the UE for the configured service access rule, as shown in step S603. If the PLMN is not indicated to the UE, or there is no any valid service access rule stored in the UE, the UE is regardless of intended areas, as shown in step S604. If the PLMN is indicated to the UE, or there is at least one valid service access rule stored in the UE, the UE is required to check whether the UE is located within an intended area before performing service accessing, as shown in step S605.

In one embodiment, an NTN cell may indicate the UE that the accessing of one or more specific services in the configured area are subjected to the control of the service access rule. The UE is required to check whether the UE is located within an intended area only when the UE is accessing or attempts to access the indicated services. The services to be subjected to control of service accessing may include, for example, MBS broadcast, short message service (SMS) over NAS, location service, or application triggering service.

Table 10 is an example of pseudo code of a service list (i.e., *affectedServiceList)* (or a list of MBS session ID of *MBSBroadcastCoinfiguration* message), service information (i.e., *serviceInfo*) (or an MBS session configuration), and a service access rule (i.e., *ServiceAccessRule)* configured to a UE. The service list may indicate one or more service IDs to the UE, and the service information may indicate the service type of the corresponding service ID. If the UE is accessing or attempts to access a service (e.g., the ongoing or attempted service) corresponding to the indicated service ID, the UE may determine whether the UE is located within an intended area according to the service access rule (e.g., the service access rule described in Table 4).

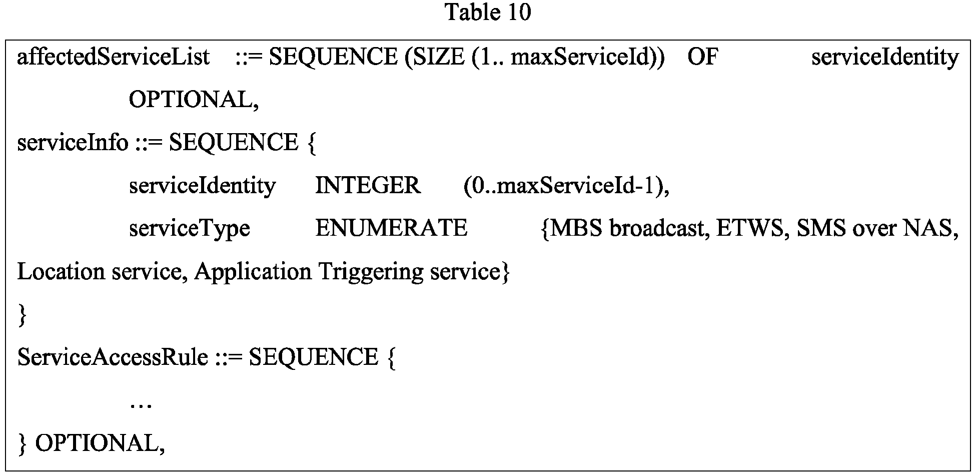

Table 11 is an example of pseudo code of a service list (i.e., *affectedServiceList)* and a service access rule (i.e., *ServiceAccessRule)* configured to a UE. The service list may indicate one or more service IDs to the UE. If the UE is accessing or attempts to access a service corresponding to the indicated service ID, the UE may determine whether the UE is located within an intended area according to the service access rule (e.g., the service access rule described in Table 5).

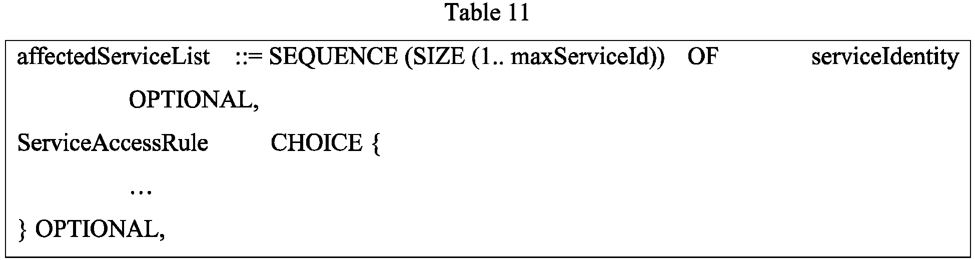

Table 12 is an example of a service access rule list (i.e., *serviceAccessRuleList)* and a service access rule (i.e., *ServiceAccessRule)* configured to the UE. The service access rule list may include one or more service access rules, wherein each service access rule may be applied for an intended area. The service access rule may include an area ID (i.e., *areaID*), a service list (i.e., *affectedServiceList),* or an indication of service access restriction (i.e., *ServiceAccessingRestriction* to indicate the associated service is subject to control of service accessing), wherein the service list may indicate one or more service IDs. If a UE is located within a configure area, the UE may apply a service access rule corresponding to the area ID of the configured area. If the UE is accessing or attempting to access a service corresponding to one of the service IDs, the UE may determine whether the UE is located within an intended area according to the indication of service access restriction. For example, if the indication indicates that the service list is nonrestricted (e.g., indicated as *notRestricted*), the UE may determine that the UE is located within an intended area (or the service accessing is nonrestricted that the service accessing is not subject to control). If the indication indicates that the service list is restricted, the UE may determine that the UE is located within a non-intended area (or the service accessing is restricted that the service accessing is subject to control). For another example, if the indication indicates that the service list is nonrestricted, the UE may determine that the UE is located within an intended area. If the indication indicates that the service list is restricted, the UE may determine that the UE is located within a non-intended area.

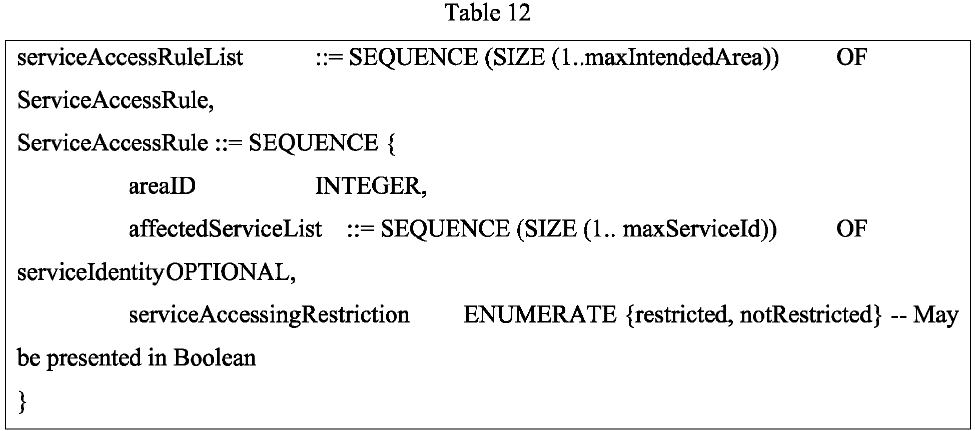

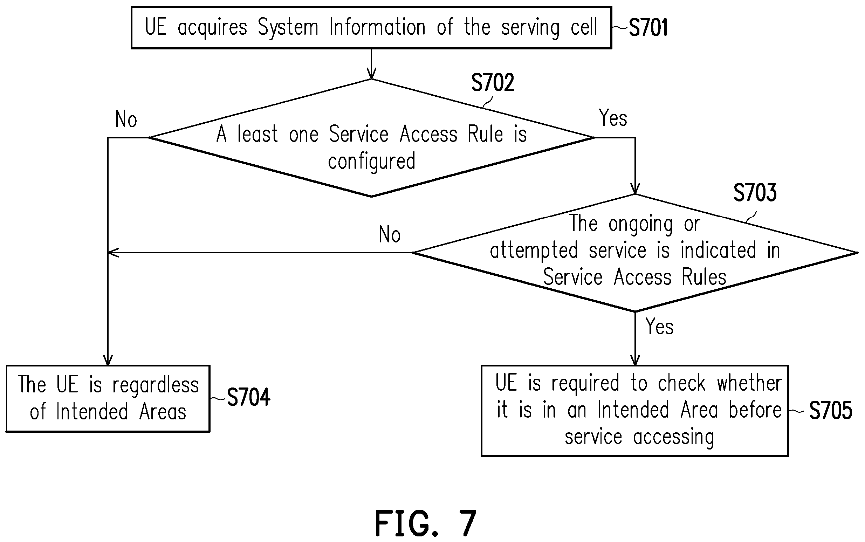

FIG. 7 illustrates a flowchart of determining whether to check intended areas according to one embodiment of the present disclosure. In step S701, a UE may acquire system information of the serving cell. The serving cell may (or may not) configure one or more service access rules to the UE. In step S702, the UE may determine whether at least one service access rule is configured. If the serving cell does not configure any service access rule to the UE, or there is no any valid service access rule stored in the UE, the UE is regardless of intended areas, as shown in step S704. That is, the UE may not check the intended areas before performing service accessing. If the serving cell configures at least one service access rule to the UE, or there is at least one valid service access rule stored in the UE, the UE may determine whether the ongoing service or the attempted service is indicated to the UE in the configured service access rule, as shown in step S703. If the ongoing service or attempted service is not indicated to the UE, the UE is regardless of intended areas, as shown in step S704. If the ongoing service or the attempted service is indicated to the UE, the UE is required to check whether the UE is located within an intended area before performing service accessing, as shown in step S705.

In one embodiment, an NTN cell may indicate the UE one or more PLMN, wherein each PLMN may be subjected to control of service accessing in one or more configured areas. Only when the UE of the indicated PLMN is accessing or attempts to access the indicated service is required to check whether the UE is located within an intended area.

Table 13 is an example of pseudo code of a PLMN list, a service list, and a service access rule. The PLMN list (i.e., *affectedPLMNList*) may include one or more PLMN IDs. The service list may include one or more service IDs. The PLMN list or the service list may be included in an MBS ID list. For example, an MBS session ID in the MBS ID list may include a PLMN ID and a service ID. If the UE camps on a cell of the network corresponding to one of the PLMN IDs or is registered to a network corresponding to one of the PLMN IDs and the UE is accessing or attempting to access a service corresponding to one of the service IDs, the UE may determine whether the UE is located within an intended area according to the service access rule (i.e., *ServiceAccessRule),* as described in Table 4.

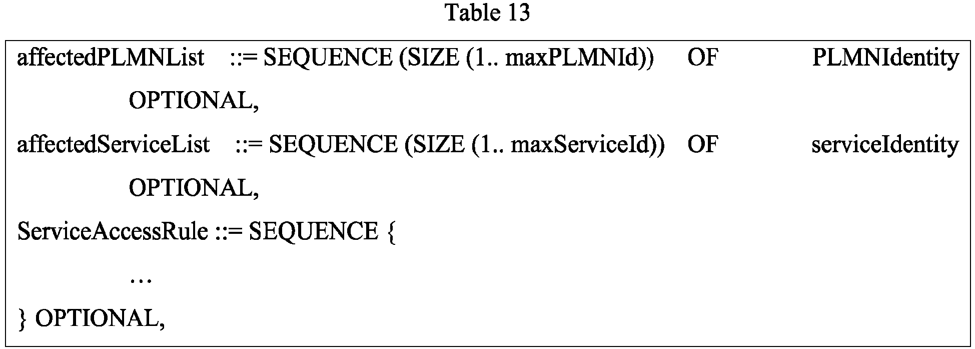

Table 14 is an example of pseudo code of a PLMN list, a service list, and a service access rule. The PLMN list (i.e., *affectedPLMNList*) may include one or more PLMN IDs. The service list may include one or more service IDs. The PLMN list or the service list may be included in an MBS ID list. For example, an MBS session ID in the MBS ID list may include a PLMN ID and a service ID. If the UE camps on a network corresponding to one of the PLMN IDs and the UE is accessing or attempting to access a service corresponding to one of the service IDs, the UE may determine whether the UE is located within an intended area according to the service access rule (i.e., *ServiceAccessRule),* as described in Table 5.

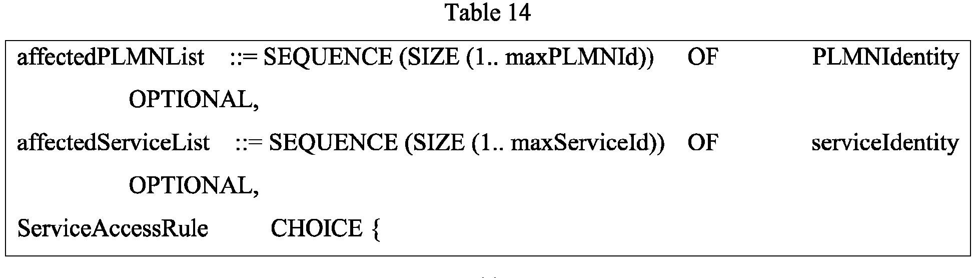

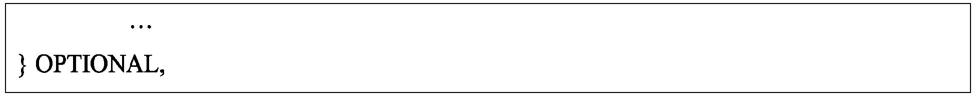

Table 15 is an example of pseudo code of a service access rule list. The service access rule list (i.e., *serviceAccessRuleList*) may include one or more service access rules (i.e., *ServiceAccessRule),* wherein each service access rule may correspond to a configured area. A service access rule may include an area ID (i.e., *areaID*) of the configured area, a PLMN list (i.e., *affectedPLMNList)* including one or more PLMN IDs, a service list (i.e., *affectedServiceList)* including one or more service IDs, and an indication of service access restriction (i.e., *serviceAccessingRestriction).* If a UE is located within a configured area, the UE may apply a service access rule corresponding to the area ID of the configured area. If the UE camps on a cell of the network corresponding to one of the PLMN IDs or is registered to a network corresponding to one of the PLMN IDs, and the UE is accessing or attempting to access a service corresponding to one of the service IDs, the UE may determine whether the UE is located within an indicated area or determine whether an ongoing or attempted service accessing is subject to control of service accessing according to the indication of service access restriction. For example, if a UE is located within a configured area and if the indication indicates that the PLMN list and the service list associated with the configured area are nonrestricted, the UE may determine that the UE is located within an area where the service accessing is nonrestricted. If the indication indicates that the PLMN list and the service list associated with the configured area are restricted, the UE may determine that the UE is located within an area where the service accessing is restricted.

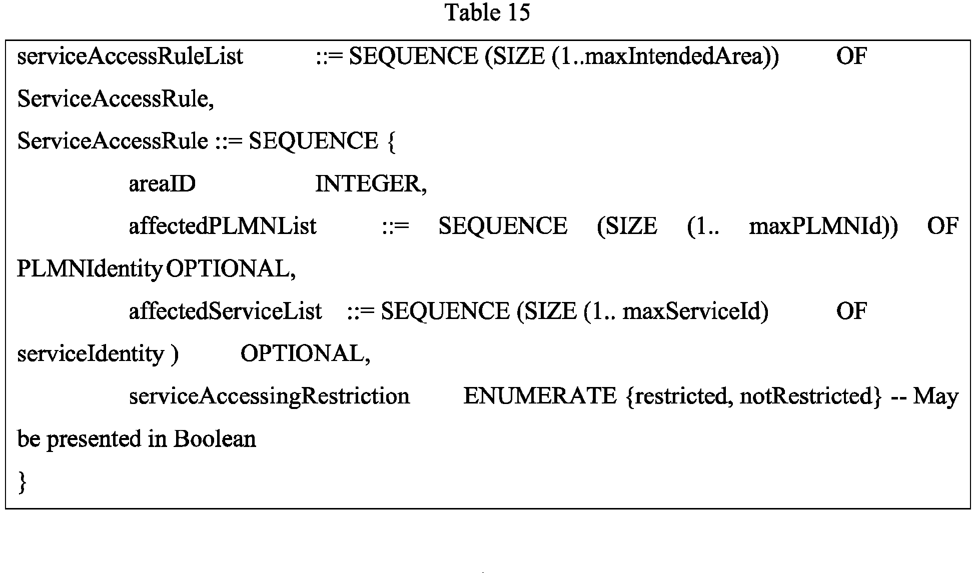

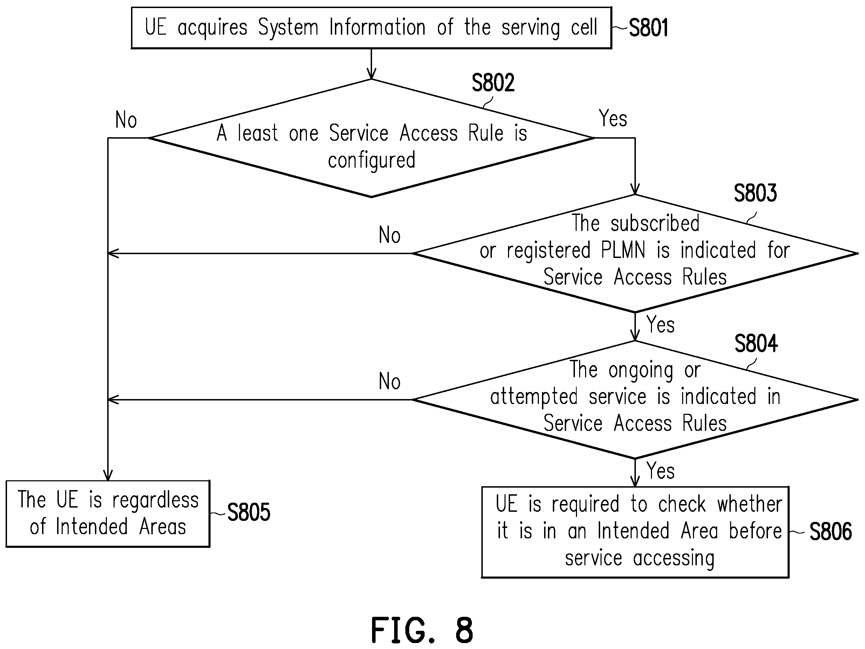

FIG. 8 illustrates a flowchart of determining whether to check intended areas according to one embodiment of the present disclosure. In step S801, a UE may acquire system information of the serving cell. The serving cell may configure one or more service access rules to the UE. In step S802, the UE may determine whether at least one service access rule is configured. The at least one service access rule may be configured by the serving cell, be configured by the previous serving cell and be stored in the UE, or be configured by the core network and stored in the UE. If the serving cell does not configure any service access rule to the UE and there is no any valid service access rule is stored in the UE, the UE is regardless of intended areas, as shown in step S805. That is, the UE may not check the intended areas before performing service accessing. If the serving cell configures at least one service access rule to the UE, or there is at least one valid service access rule stored in the UE, the UE may determine whether the subscribed or registered PLMN is indicated to the UE for the configured service access rule, as shown in step S803. If the PLMN is not indicated to the UE, the UE is regardless of intended areas, as shown in step S805. If the PLMN is indicated to the UE, the UE may determine whether the ongoing service or the attempted service is indicated to the UE in the configured service access rule, as shown in step S804. If the ongoing service or attempted service is not indicated to the UE, the UE is regardless of intended areas, as shown in step S805. If the ongoing service or the attempted service is indicated to the UE, the UE is required to check whether the UE is located within an intended area before performing service accessing, as shown in step S806.

In one embodiment, a UE may check whether the UE is located within an intended area or whether the UE is allowed to perform service accessing according to the following triggered events: when a cell is selected or reselected by a UE as a serving cell; when a cell is indicated by a primary serving cell as a serving cell of the UE; when the UE connects to the serving cell by an RRC reconfiguration with synchronization procedure; when system information of a serving cell is acquired or reacquired by the UE; when the UE attempts to initiate a service (e.g., the reception of MBS broadcast service, a SMS over NAS, or a location service); when a configuration including one or more configured areas is received by the UE; when a configuration including one or more service access rules is received by the UE; when a NAS message of UE configuration update or a registration response is received by the UE; or a UE location is obtained by the UE and the check of the intended area has not been performed after the UE location is obtained.

In one embodiment, if a UE determines that the UE is located within a non-intended area (i.e., a configured area indicated as a non-intended area according to the configuration of service access rules) or the UE is not allowed to perform the service accessing, the UE may stop performing service accessing based on the following methods: the UE may autonomously stop accessing the ongoing services (e.g., uplink transmission of an ongoing service or downlink reception of an ongoing service) subjected to the control of service accessing according to the service access rules. For example, if the UE is located within a configured area indicated as non-intended, the UE may stop accessing the ongoing services indicated as *affectedService* according to the service access rules. For another example, if the UE is located within a configured area indicated as non-intended, the UE may not start accessing services indicated as *affectedService* according to the service access rules. For example, the UE may apply the second set of configurations for service accessing associated with non-intended areas, the second set of configurations may not provide resources for the UE to access specific service thus to stop the UE from accessing specific services (including the ongoing service accessing or attempted service accessing) in the specific configured area. That is, the UE may be disabled from initialing an uplink (UL) transmission of a service or initialing a downlink (DL) reception of a service; or the UE may initiate an UL transmission to the network and perform service accessing according to the response of the network (so as to stop service accessing). That is, the UE may be disabled from initialing an UL transmission of a service or initialing a DL reception of a service.

In one embodiment, if a UE determines that the UE is not located within a non-intended area (i.e., a configured area indicated as a non-intended area according to the configuration of service access rules) or the UE is allowed to perform the service accessing, the UE may start or restart performing service accessing based on the following methods: the UE may autonomously start or restart accessing of attempted or ongoing services (if any); the UE may start or restart accessing of attempted or ongoing services (if any) by applying a first set of configurations associated with intended areas; or the UE may initiate an UL transmission to the network and perform service accessing according to the response of the network (so as to start or restart service accessing).

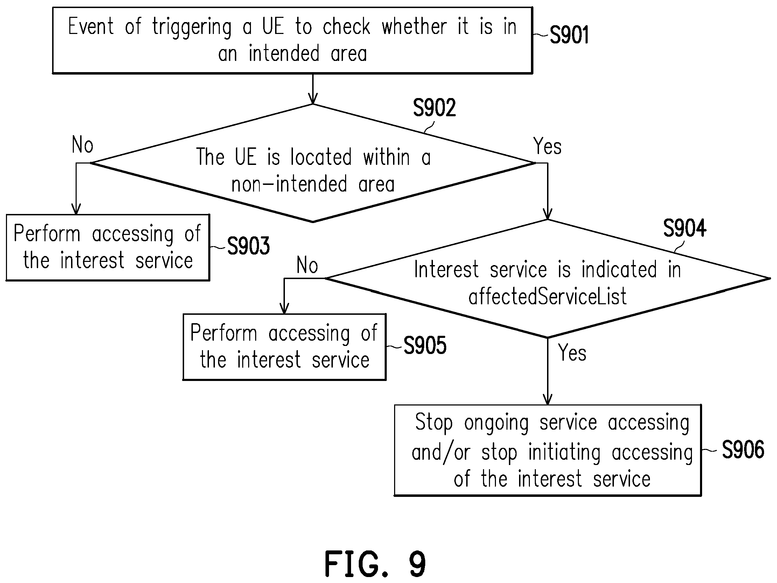

FIG. 9 illustrates a flowchart of determining whether to perform service accessing according to one embodiment of the present disclosure. In step S901, an event may trigger a UE to check whether the UE is located within an intended or non-intended area. The event that may trigger a UE to check whether the UE is located within an intended or non-intended area includes at least one of the following events: when a cell is select or reselect as a serving cell by the UE, when System Information of the serving cell is acquired or re-acquired by the UE, when the UE is attempting to initiate a service, when a configuration of Configured Areas and Service Access Rules are received by the UE, when a NAS message of UE Configuration Update or Registration Response is received by the UE, when the UE is connecting with the serving cell by a RRC Reconfiguration with Synchronization procedure, or when the UE location is obtained by the UE and a check of intended area has not been performed after the UE location is obtained. In step S902, the UE may determine whether the UE is located within a non-intended area. If the UE is not located within a non-intended area, the UE may perform accessing of the interest service, as shown in step S903. If the UE is located within a non-intended area, the UE may determine whether the interest service is indicated in *affectedServiceList.* If the interest service is indicated in *affectedServiceList,* the UE may execute step S905. If the interest service is not indicated in *affectedServiceList,* the UE may execute step S906. In step S905, the UE may perform accessing of the interest service. In step S906, the UE may stop ongoing service accessing and/or stop initiating accessing of the interest service.

In one embodiment, a serving cell may configure different sets of system information to a UE for service accessing, wherein the different sets of system information may be associated with intended areas and non-intended areas respectively. If a UE determines that the UE is located within an intended area, the UE may apply the set of system information associated with intended areas. If a UE determines that the UE is located within a non-intended area, the UE may apply the set of system information associated with non-intended areas.

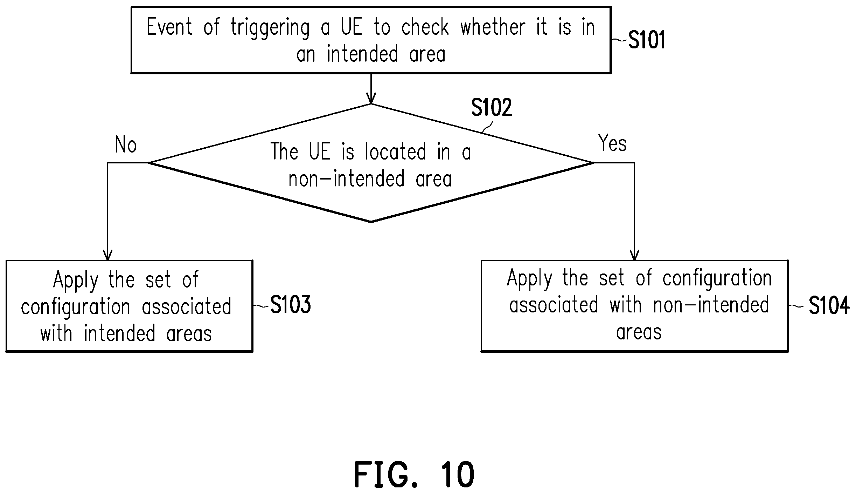

FIG. 10 illustrates a flowchart of applying the set of configurations according to one embodiment of the present disclosure. A UE may apply a set of configurations for performing service accessing. In step S101, an event may trigger a UE to check whether the UE is located within an intended or non-intended area. In step S102, the UE may determine whether the UE is located within a non-intended area. If the UE is not located within a non-intended area, the UE may apply the set of configurations associated with intended areas, as shown in step S103. If the UE is located within a non-intended area, the UE may apply the set of configurations associated with non-intended areas, as shown in step S104.

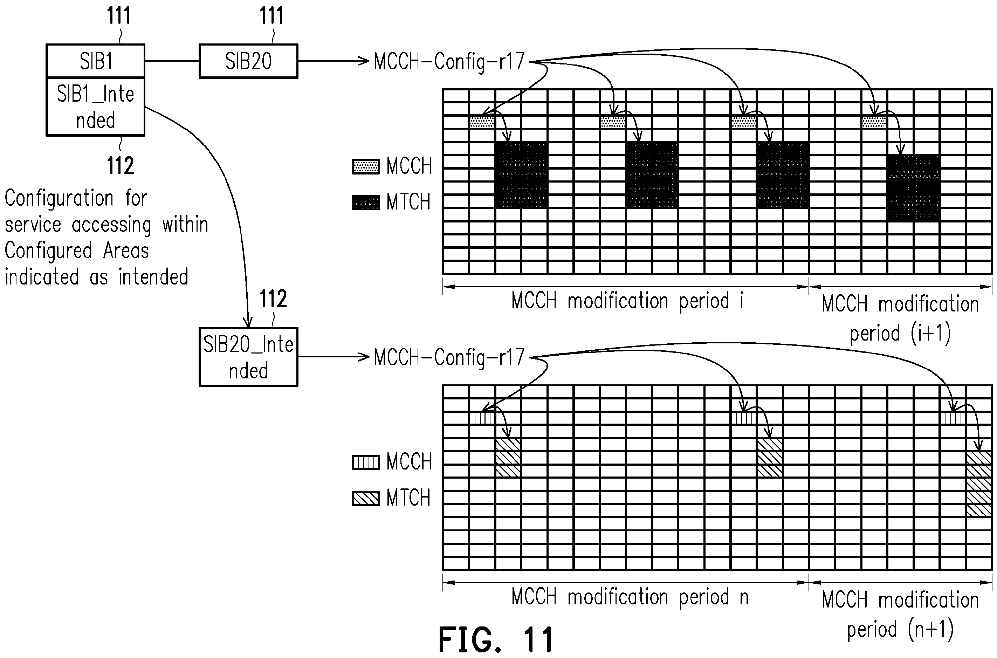

FIG. 11 illustrates a schematic diagram of different sets of system information according to one embodiment of the present disclosure. If a UE determines that the UE is located within a non-intended area, the UE may obtain a set of configurations 111 associated with non-intended areas from at least one system information block (SIB), such as SIB 1 and SIB20, wherein the set of configurations 111 may include a first *MCCH-Config-r1*7 indicating a first resources of MBS control channel (MCCH) and may further indicate a first resources of MBS traffic channel (MTCH). The UE may perform service accessing by using the indicated resources. If a UE determines that the UE is located within an intended area, the UE may obtain a set of configurations 112 associated with intended areas from at least one SIB, such as SIB1_Intended and SIB20_Intended, wherein the set of configurations 112 may include a second *MCCH-Config-r17* indicating a second resources of MCCH and may further indicate a second resource of MTCH. The first MCCH-Config-r17 may be different from the second MCCH-Config-r17, the first resource of MCCH may be different from the second resource of MCCH, and the first resource of MTCH may be different from the second resource of MTCH. The UE may perform service accessing by using the indicated resources.

In one embodiment, the UE may receive SIB1 and SIB1_Intended from the network via the same message. In one embodiment, the UE may receive SIB 1 and SIB1_Intended from the network via different messages. In one embodiment, the content of MCCH may include an MBS session ID, an associated group radio network temporary identifier (G-RNTI), a *MBSBroadcastConfiguration* message, or MTCH scheduling information (e.g., *pdsch-ConfigMTCH-r17).*

Table 16 is an example of the contents of a SIB1 for supporting service accessing configuration. The SIB1 may include a *si-SchedulingInfoIntended,* wherein the *si-SchedulingInfoIntended* associated with specific services may be optional (i.e., may or may not be provided by the SIB1). SIB 1 may include *servingCellConfigCommonlntended,* wherein *servingCellConfigCommonIntended* may be used for configuring a second set of DL common configurations (including paging, system information (SI)) and UL common configurations (including initial access). The *servingCellConfigCommonlntended* may be optional.

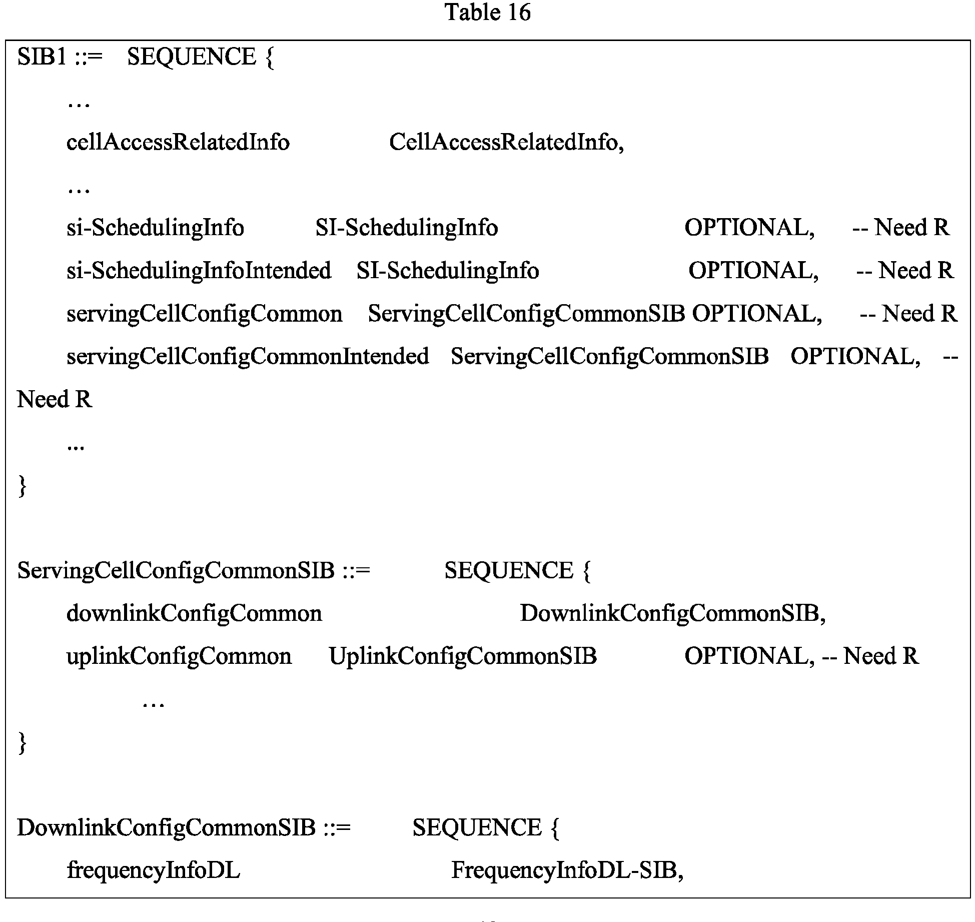

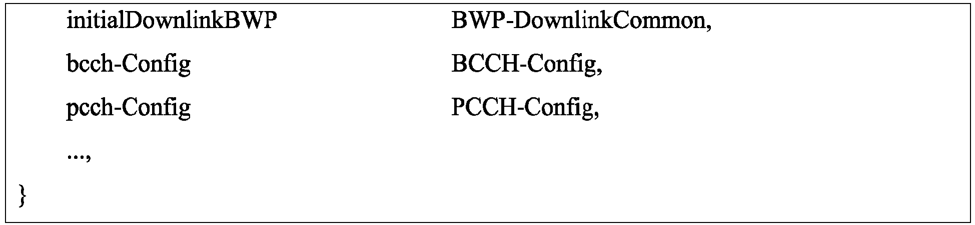

In one embodiment, if an NTN cell is configured (e.g., by access and mobility management function (AMF) or operations, administration, and maintenance (OAM) function) to support location-based service accessing, different sets of DL resources (e.g., control resource set (CORESET) or common search space) for paging may be configured to the UE. In one embodiment, a NTN cell may deliver two copies of paging message for a RRC_IDLE/RRC_INACTIVE UE when the UE location is not known by the NTN cell: one copy could be delivered via the DL resource associated with intended areas, the other copy could be delivered via the DL resource associated with non-intended areas. In one embodiment, a NTN cell may deliver only one copy of paging message for a RRC_IDLE/RRC_INACTIVE UE when the UE location is known by the NTN cell: only a copy could be delivered via the DL resource associated with the configured area in which the UE is located.

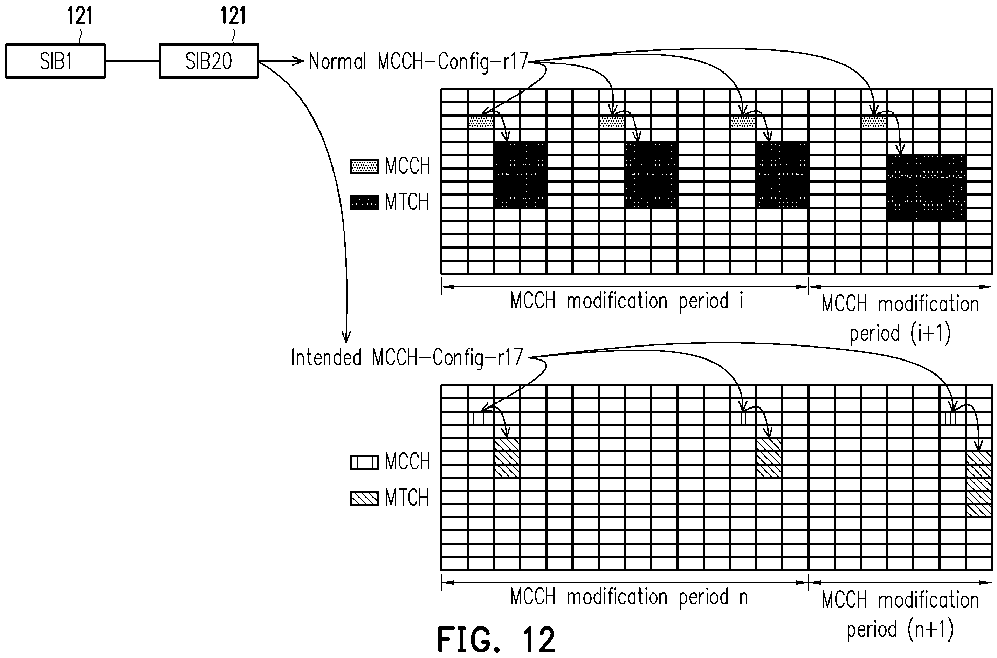

FIG. 12 illustrates a schematic diagram of different SIB contents for specific services according to one embodiment of the present disclosure. A UE may obtain a set of SIB contents for non-intended areas (e.g., Normal *MCCH-Config*) and a set of SIB contents for intended areas (e.g., Intended *MCCH-Config*) from at least one SIB 121, such as SIB 1 and SIB20. The contents of at least one SIB for non-intended areas or the at least one SIB contents for intended areas may indicate resources of MCCH or MTCH. If a UE determines that the UE is located within a non-intended area, the UE may apply the set of SIB contents for non-intended areas for service accessing. If a UE determines that the UE is located within an intended area, the UE may apply the SIB contents for intended areas for service accessing.

In one embodiment, the content of MCCH may include an MBS session ID, an associated group radio network temporary identifier (G-RNTI), a *MBSBroadcastConfiguration* message, or MTCH scheduling information (e.g., *pdsch-ConfigMTCH-r17*)*.* The scheduling of the MBS session ID may be omitted if the MBS session ID is subject to control of service accessing in certain intended areas.

Table 17 is an example of the contents of a SIB (e.g., SIB20-r17), wherein the SIB may be configured to a UE by the network. The UE may determine that the UE is located within an intended area or a non-intended area. If the UE is located within an intended area, the UE may apply the SIB contents corresponding to *IntendedMBSAccessConfig.* If the UE is located within a non-intended area, the UE may apply the SIB contents corresponding to *normalMBSAccessConfig.* It should be noted that, even if the UE is located within a non-intended area that specific services are restricted for the UE, the information provided by the SIB may not indicate the at least one interest service of the UE is subject to control of service accessing for the UE. The UE may initial the interest service according to the information provided by the SIB.

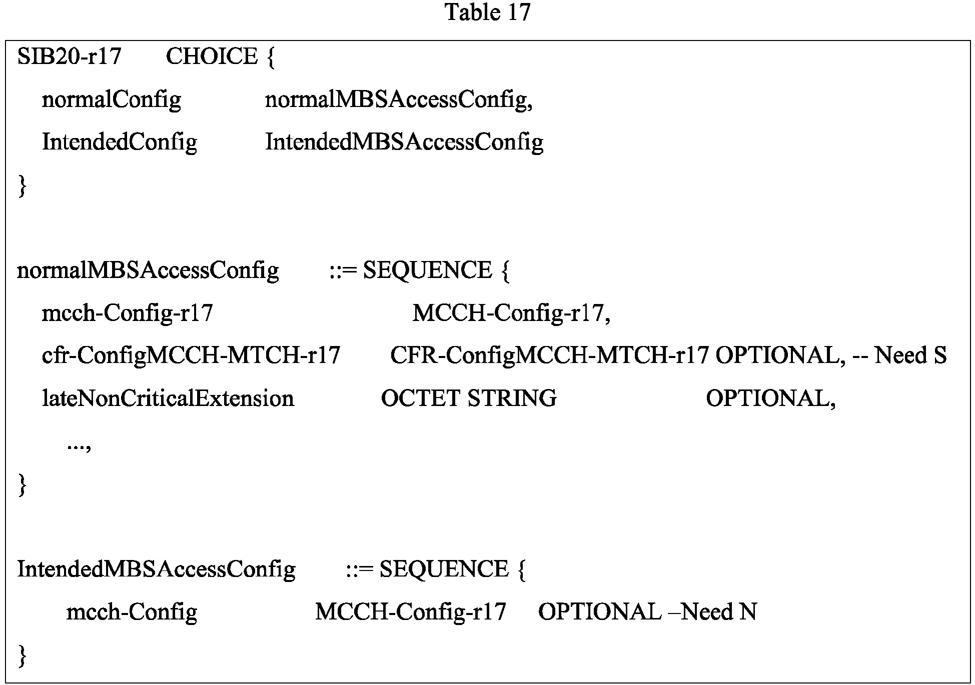

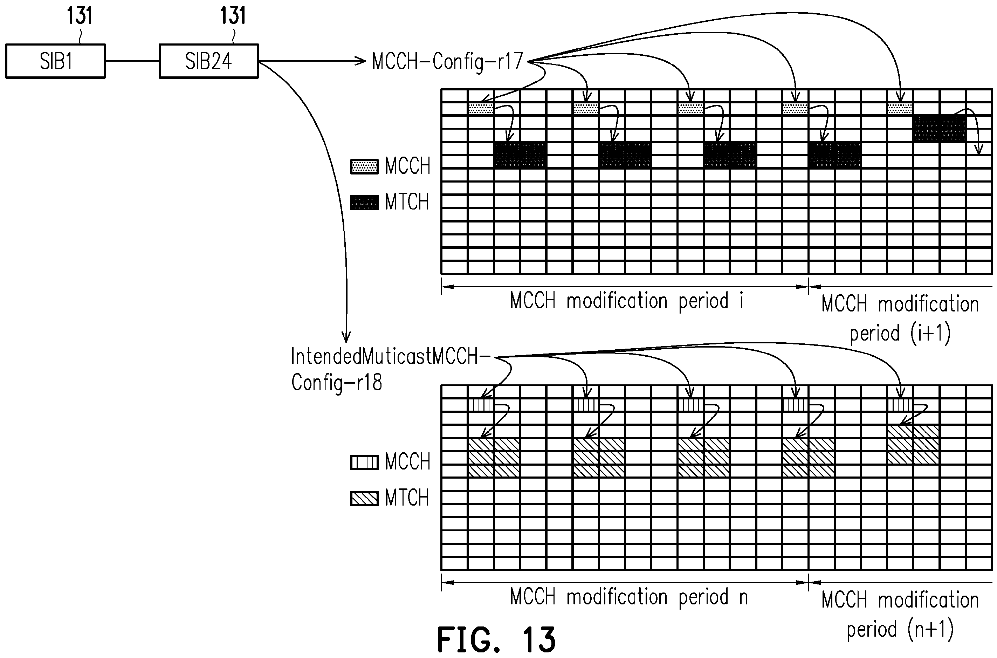

FIG. 13 illustrates a schematic diagram of different SIB contents for specific services according to one embodiment of the present disclosure. A UE may obtain a set of SIB contents for non-intended areas (e.g., *MCCH-Config)* and a set of SIB contents for intended areas (e.g., *IntendedMulticastMCCH-Config)* from at least one of SIB 131, such as SIB1 and SIB24. The contents of the at least one SIB for non-intended areas or the contents of the at least one SIB for intended areas may indicate resources of MCCH or MTCH. If a UE determines that the UE is located within a non-intended area, the UE may apply the contents of the at least one SIB for non-intended areas for service accessing. If a UE determines that the UE is located within an intended area, the UE may apply the contents of the at least one SIB for intended areas for service accessing.

Table 18 is an example of the contents of SIB (e.g., SIB24), wherein the SIB may be configured to a UE by the network. The UE may determine that the UE is located within an intended area or a non-intended area. If the UE is located within an intended area, the UE may apply the SIB contents corresponding to *intendedMulticastMCCH-Config-r18.* If the UE is located within a non-intended area, the UE may apply the SIB contents corresponding to *multicastMCCH-Config-r18.* It should be noted that, even if the UE is located within a non-intended area that specific services are restricted for the UE, the information provided by the SIB may not indicate the at least one interest service of the UE is subject to control of service accessing for the UE.. The UE may initial the interest service according to the information provided by the SIB.

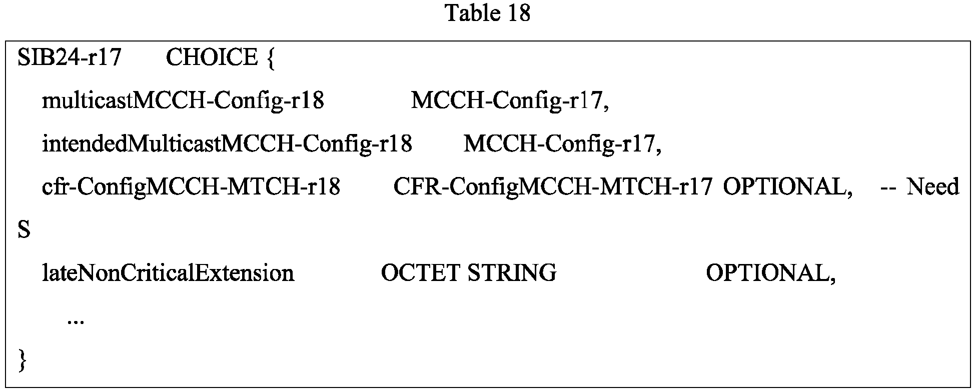

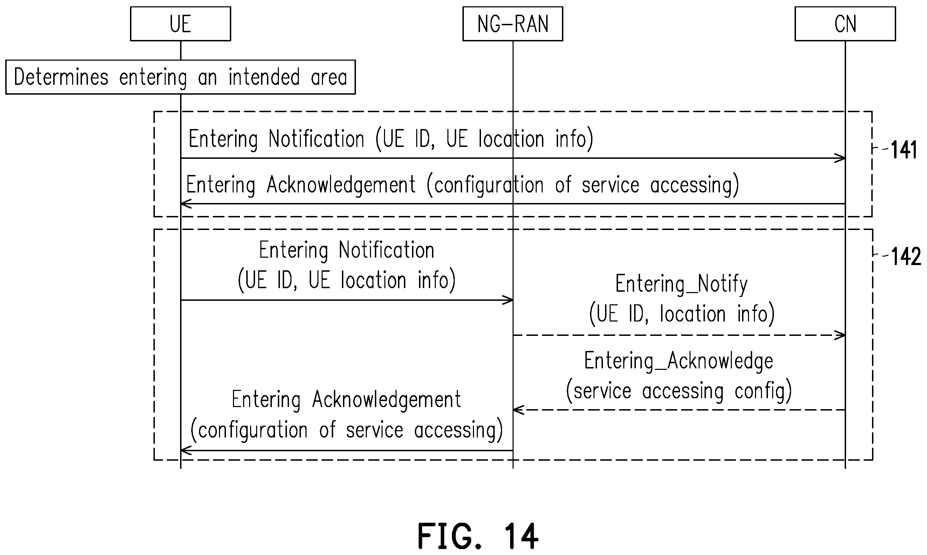

In one embodiment, if a UE is required to check whether the UE is located within an intended area, and the UE determines that the UE is entering an intended area, the UE may initiate an UL transmission for entering notification to the network. The determining of entering an intended area may include: the UE determines that the UE is located within an intended area and there has no any entering intended area informing been successfully transmitted to the network yet. After determining of entering an intended area, the UE may transmit an entering notification to the network. The UE may need to have obtained UL resource for transmitting an entering notification to the network (e.g., obtained from System Information transmitted from the network, or obtained from the System Information associated with the network transmitted by a previous serving cell of the UE), or the UE may need to establish RRC connection successfully with the network before transmitting an entering notification to the network. The entering notification may include the information of the UE ID or UE location. The UE ID could be a Radio Network Temporary Identity (RNTI) of the UE associated with the connected cell (e.g., a Cell RNTI), or the temporary ID for the UE processed according to the UE's International Mobile Subscriber Identity (IMSI), International Mobile Equipment Identity (IMEI), Temporary Mobile Subscriber Identity (TMSI), 5G Globally Unique Temporary Identity (5G-GUTI), Subscription Permanent Identifier (SUPI), or Subscription Concealed Identifier (SUCI). The UE location could be a cell ID of the serving cell of the UE, a tracking area ID (TAI) of the UE, a registered area ID (RAI) of the UE, or a GNSS location information. The network could be the 5G core network (CN) or the RAN (e.g., next generation RAN (NG-RAN)). The entering notification message may be a NAS message (as shown in NAS procedure 141 in FIG. 14), an RRC message (as shown in RRC procedure (e.g., a 2-steps random access procedure) 142 in FIG. 14), or a MAC CE. The network may response an acknowledgement corresponding to the entering notification to the UE, wherein the acknowledgement may be associated with the subscription, registration, or location information of the UE. The acknowledgement may include a configuration for service accessing for the UE to perform service accessing. The configuration may be a set of system information for the UE to apply for service accessing in the cell or a set of UL and DL resources for the UE to apply for service accessing (e.g., for accessing specific services) in the cell.

In one embodiment, if a UE is required to check whether the UE is located within an intended area, and the UE determines that the UE is leaving an intended area, the UE may initiate an UL transmission for leaving notification to the network. The determining of leaving an intended area may include: the UE determines that the UE is located within a non-intended area and there has no any leaving intended area informing been successfully transmitted to the network yet. After determining of leaving an intended area, the UE may transmit a leaving notification to the network. The leaving notification may include the information of the UE ID or UE location. The network could be the 5G core network or the RAN. The leaving notification message may be a NAS message, an RRC message, or a MAC CE. The network may response an acknowledgement corresponding to the leaving notification to the UE, wherein the acknowledgement may be associated with the subscription, registration, or location information of the UE. The acknowledgement may include a configuration for service accessing for the UE to perform service accessing. The configuration may be a set of system information for the UE to apply for service accessing in the cell or a set of UL and DL resources for the UE to apply for service accessing (e.g., for accessing specific services) in the cell.

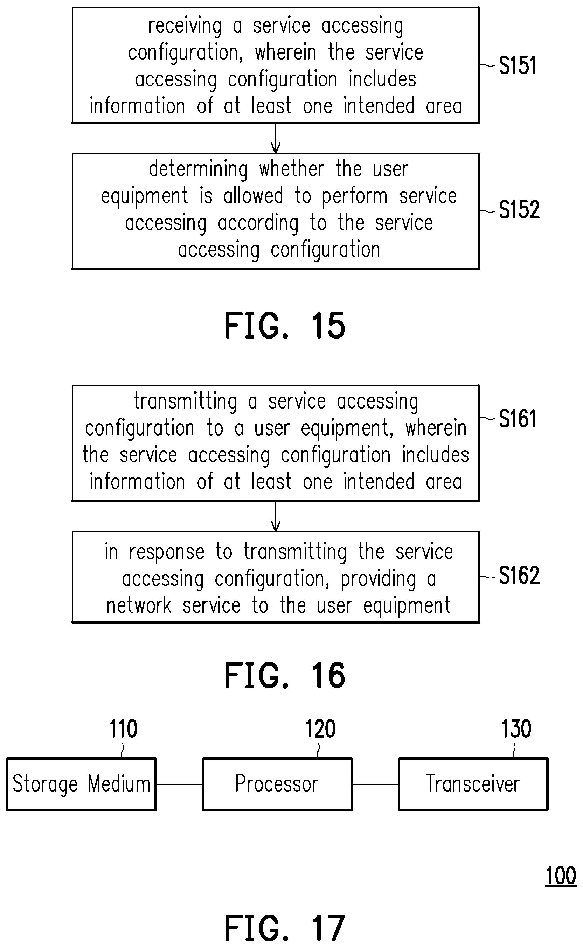

FIG. 15 illustrates a flowchart of a method of implementing NTN network accessing according to one embodiment of the present disclosure, wherein the method may be implemented by a UE. In step S151, receiving a service accessing configuration, wherein the service accessing configuration includes information of at least one intended area. In step S152, determining whether the user equipment is allowed to perform service accessing according to the service accessing configuration.

FIG. 16 illustrates a flowchart of a method of implementing NTN network accessing according to one embodiment of the present disclosure, wherein the method may be implemented by a network or a BS. In step S161, transmitting a service accessing configuration to a user equipment, wherein the service accessing configuration includes information of at least one intended area. In step S162, in response to transmitting the service accessing configuration, providing a network service to the user equipment.

FIG. 17 illustrates a schematic diagram of a communication device 100 according to one embodiment of the present disclosure. The communication device 100 may include a storage medium 110, a processor 120, and a transceiver 130. The processor 120 is coupled to the storage medium 110 and the transceiver 130 and is configured to at least to implement the method as described in figures 1-16 as well as its exemplary embodiment and alternative variations. In one embodiment, the communication device 100 may be implemented as the UE or the network (e.g., network node or BS) as mentioned above.

The processor 120 could be implemented by using programmable units such as a microprocessor, a micro-controller, a digital signal processor (DSP), a field programmable gate array (FPGA), etc. The functions of the processor 120 may also be implemented with separate electronic devices or ICs. It should be noted that the functions of processor 120 may be implemented with either hardware or software.

The storage medium 110 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 120.

The transceiver 130 may be configured to transmit and receive signals respectively in the radio frequency. The transceiver 130 may also perform operations such as low noise amplifying, impedance matching, frequency mixing, up or down frequency conversion, filtering, amplifying, and so forth. The transceiver 130 may include one or more digital-to-analog (D/A) converters or analog-to-digital (A/D) converters which are configured to covert from an analog signal format to a digital signal format during uplink signal processing and from a digital signal format to an analog signal format during downlink signal processing. The transceiver 130 may include an antenna array which may include one or more antennas to transmit and receive omnidirectional antenna beams or directional antenna beams.

Based on the above, the disclosure may allocate service areas using geographical information instead of a cell ID list or a tracking area ID based on the GNSS function of the NTN UE. Accordingly, the intended areas (i.e., the allocated service areas) can be properly restricted within the coverage of the NTN cell. The base station may determine how to manage the service access behavior of a UE based on whether the UE is located within an intended area. A UE in an intended area may perform service accessing according to the service access rules corresponding to the intended area.

## Claims

1. A method of implementing non-terrestrial network accessing, used by a user equipment (100), comprising:
receiving a service accessing configuration (111, 112, 121, 131), wherein the service accessing configuration (111, 112, 121, 131) comprises information of at least one intended area (30, 40); and
determining whether the user equipment (100) is allowed to perform service accessing according to the service accessing configuration (111, 112, 121, 131).

2. The method according to claim 1, wherein the step of determining whether the user equipment (100) is allowed to perform the service accessing according to the service accessing configuration (111, 112, 121, 131) comprising:
determining whether the user equipment (100) is allowed to perform the service accessing based on whether the user equipment (100) is located within the at least one intended area (30, 40).

3. The method according to claim 1, wherein the at least one intended area (30, 40) is configured to the user equipment (100) according to one of the following:
the at least one intended area (30, 40) is configured from a core network to the user equipment (100) via a non-access stratum message; and
the at least one intended area (30, 40) is configured from a radio access network to the user equipment (100) via system information or a user equipment specific message.

4. The method according to claim 1, wherein the information of the at least one intended area (30, 40) is associated with a configured reference location (31, 32, 41, 42) comprising the information of longitude information and latitude information.

5. The method according to claim 1, wherein each one of the at least one intended area (30, 40) is associated with an intended area identity.

6. The method according to claim 1, wherein the at least one intended area (30, 40) is associated with at least one public land mobile network identity, wherein the step of determining whether the user equipment (100) is allowed to perform the service accessing comprises:
determining whether the user equipment (100) camps on a network corresponding to the at least one public land mobile network identity; and
in response to the user equipment (100) camping on the network, determining whether the user equipment (100) is allowed to perform the service accessing.

7. The method according to claim 1, wherein the service accessing configuration (111, 112, 121, 131) further comprises at least one service access rule.

8. The method according to claim 7, further comprising:
in response to the at least one service access rule, determining whether the user equipment (100) is located within the at least one intended area (30, 40).

9. The method according to claim 1, wherein the step of determining whether the user equipment (100) is allowed to perform the service accessing is triggered by at least one of the following:
a cell is camped by the user equipment (100), selected by the user equipment (100) as a serving cell, or indicated by a primary serving cell as a serving cell of the user equipment (100);
system information of a serving cell is acquired or reacquired by the user equipment (100);
the user equipment (100) attempts to initiate a service;
a configuration comprising the at least one intended area (30, 40) is received by the user equipment (100);
a configuration comprising the at least one service access rule is received by the user equipment (100);
a non-access stratum message for user equipment configuration update or a registration response is received by the user equipment (100);
a location of the user equipment (100) is obtained by the user equipment (100) and a check of intended area has not been performed by the user equipment (100) after the location is obtained; or
the user equipment (100) connects to a serving cell based on a radio resource control reconfiguration with synchronization procedure.

10. The method according to claim 1, wherein the user equipment (100) is allowed to perform the service accessing when determining the user equipment (100) is located within the at least one intended area (30, 40) according to the service accessing configuration (111, 112, 121, 131) based on at least one of the following:
the user equipment (100) is located within the at least one intended area (30, 40);
the user equipment (100) is located within a location, wherein the location is subjected to control of the service accessing;
a public land mobile network identity corresponding to the user equipment (100) is subjected to control of the service accessing in the at least one intended area (30, 40); or
an ongoing service or an intended service of the user equipment (100) is subjected to control of the service accessing in the at least one intended area (30, 40),
wherein the determining the user equipment (100) is located within the at least one intended area (30, 40) is based on at least one of the following:
a distance between the user equipment (100) and the at least one intended area (30, 40) is less than or equal to a radius of the at least one intended area (30, 40); or
a distance between the user equipment (100) and the at least one intended area (30, 40) is less than or equal to a threshold configured by a network.

11. The method according to claim 1, wherein in response to determining the user equipment (100) being not allowed to perform the service accessing, performing at least one of the following:
stopping accessing an ongoing service;
stopping performing an uplink transmission of an ongoing service;
stopping performing a downlink reception of an ongoing service;
disabling the user equipment (100) from initialing an uplink transmission of a service; and
disabling the user equipment (100) from initialing a downlink reception of a service.

12. A method of implementing non-terrestrial network accessing, used by a base station, comprising:
transmitting a service accessing configuration (111, 112, 121, 131) to a user equipment (100), wherein the service accessing configuration (111, 112, 121, 131) comprises information of at least one intended area (30, 40); and
in response to transmitting the service accessing configuration (111, 112, 121, 131), providing a network service to the user equipment (100).

13. The method according to claim 12, wherein the step of transmitting the service accessing configuration (111, 112, 121, 131) comprising one of the following:
transmitting the service accessing configuration (111, 112, 121, 131) to the user equipment (100) via a non-access stratum message; and
transmitting the service accessing configuration (111, 112, 121, 131) to the user equipment (100) via system information or a user equipment specific message.

14. The method according to claim 12, wherein the information of the at least one intended area is associated with a configured reference location (31, 32, 41, 42) comprising longitude information and latitude information.

15. The method according to claim 12, wherein in response to transmitting the service accessing configuration (111, 112, 121, 131), providing the network service to the user equipment (100) further comprises:
providing more than one downlink transmission resources for a transmission of downlink traffic to the user equipment (100).

16. The method according to claim 15, wherein a first downlink traffic transmitted by a first downlink transmission resource of the more than one downlink transmission resources is different from a second downlink traffic transmitted by a second downlink transmission resource of the more than one downlink transmission resources.

17. A user equipment (100) for implementing non-terrestrial network accessing, comprising:
a transceiver (130); and
a processor (120), coupled to the transceiver (130), wherein the processor (120) is configured to:
receive a service accessing configuration (111, 112, 121, 131) via the transceiver (130), wherein the service accessing configuration (111, 112, 121, 131) comprises information of at least one intended area (30, 40); and
determining whether the user equipment (100) is allowed to perform service accessing according to the service accessing configuration (111, 112, 121, 131).
